# EUROPEAN PATENT SPECIFICATION

(11) **EP 3 376 070 B1**
(45) Date of publication and mention of the grant of the patent: **29.01.2020**
(21) Application number: 18161689.7
(22) Date of filing: 14.03.2018
(51) Int. Cl.: F16H 55/24, F16H 57/022, F16H 57/021, F16H 57/12, F16H 57/039, F16H 57/00, F16H 57/02

(54) **METHOD FOR MANUFACTURING WORM REDUCER, WORM REDUCER AND ELECTRIC POWER STEERING SYSTEM**
VERFAHREN ZUR HERSTELLUNG EINES SCHNECKENGETRIEBES, SCHNECKENGETRIEBE UND ELEKTRISCHES SERVOLENKSYSTEM
PROCÉDÉ DE FABRICATION DE RÉDUCTEUR À VIS SANS FIN, RÉDUCTEUR À VIS SANS FIN ET SYSTÈME DE DIRECTION ASSISTÉE ÉLECTRIQUE

(30) Priority: 16.03.2017 JP 2017051810
(43) Date of publication of application: 19.09.2018
(73) Proprietor: JTEKT CORPORATION, Osaka 542-8502 (JP)
(72) Inventor: KAWAMURA, Naofumi, Osaka-shi, Osaka 542-8502 (JP); NOGUCHI, Tetsushi, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 3 042 826
- DE-A1-102013 213 708
- US-A1- 2015 107 384

## Description

### BACKGROUND OF THE INVENTION

### 1. Field of the Invention

The present invention relates to a method for manufacturing a worm reducer, a worm reducer manufactured by the manufacturing method, and an electric power steering system including the worm reducer.

### 2. Description of the Related Art

Japanese Patent Application Publication No. 2015-187461 (JP 2015-187461 A) and Japanese Patent Application Publication No. 2012-91653 (JP 2012-91653 A) disclose a worm reducer including a worm wheel, a worm shaft that meshes with the worm wheel, and a housing that houses the worm wheel and the worm shaft. The worm reducer has a structure in which a coil spring urges the worm shaft toward the worm wheel in order to reduce a backlash between the worm shaft and the worm wheel. The housing includes a worm shaft housing portion that houses the worm shaft, and a coil spring housing portion that houses the coil spring.

The coil spring housing portion of the worm reducer of JP 2015-187461 A communicates with the worm shaft housing portion and the outside of the housing. When assembling the worm reducer, the worm shaft is arranged, then the coil spring is arranged from the outside of the housing, and then the opening of the coil spring housing portion is closed by a cap. As a result, the coil spring is elastically deformed by being sandwiched between the cap and the worm shaft, thereby urging the worm shaft toward the worm wheel.

The coil spring housing portion of the worm reducer of JP 2012-91653 A does not communicate with the outside of the housing from the worm shaft housing portion. That is, the coil spring housing portion does not have an opening to the outside of the housing. Therefore, the cap provided in the worm reducer of JP 2015-187461 A is not necessary, whereby the number of components can be reduced. When the worm shaft is arranged in the worm shaft housing portion in the assembling of the worm reducer of JP 2012-91653 A, however, the coil spring cannot be inserted into the coil spring housing portion afterwards. Thus, the worm shaft needs to be inserted into the worm shaft housing portion after the coil spring is arranged in the coil spring housing portion. The coil spring is not compressed before the worm shaft is inserted into the worm shaft housing portion. Therefore, a part of the coil spring is located in the worm shaft housing portion. Thus, the part of the coil spring obstructs the insertion of the worm shaft into the worm shaft housing portion.

EP 3 042 826 A1 also discloses a worm reducer.

US 2015/0107384 A1 discloses a further worm reducer having a worm shaft extending in an axial direction, a worm wheel that meshes with the worm shaft, a housing having a worm shaft housing space that houses the worm shaft, and an opening that communicates with one end of the worm shaft housing space in the axial direction. The housing has a recess formed on an inner face of the housing at a part that defines the one end of the worm shaft housing space in the axial direction. An elastic member urges the worm shaft toward the worm wheel and a cushioning member is arranged between the worm shaft and the inner face of the housing and engages with the recess so as not to be rotatable in a circumferential direction of the worm shaft. A lid member closes the opening.

### SUMMARY OF THE INVENTION

It is one object of the present invention to provide a method for manufacturing a worm reducer, a worm reducer, and an electric power steering system, in which assembling workability is improved.

This object is solved by independent claim 1 which defines a method for manufacturing a worm reducer, by independent claim 5 which defines a worm reducer, and by dependent claim 6 which defines an electric power steering system. Particular embodiments of the invention are laid down in the dependent claims.

A method for manufacturing a worm reducer according to one aspect of the present invention has the following features in its structure. That is, this method is a method for manufacturing a worm reducer in which an elastic member urges a worm shaft housed in a housing toward a worm wheel. The method includes an elastic member arranging step, a jig inserting step, a worm shaft inserting step, and a jig removing step. The elastic member arranging step is a step of arranging the elastic member in a recess formed on an inner face of the housing. The jig inserting step is a step of inserting a jig into the housing, and compressing the elastic member by the jig. The worm shaft inserting step is a step of inserting the worm shaft into the housing after the jig inserting step. The jig removing step is a step of removing the jig from the housing.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view of an electric power steering system to which a worm reducer according to one embodiment of the present invention is applied;
FIG. 2 is a sectional view of a main part of the worm reducer according to the embodiment of the present invention;
FIG. 3 is a sectional view taken along a line III-III in FIG. 2;
FIG. 4 is a perspective view of the periphery of an opening of a housing of the worm reducer according to the embodiment of the present invention;
FIG. 5 is a sectional view of the periphery of the opening of the housing of the worm reducer according to the embodiment of the present invention;
FIG. 6 is a schematic view illustrating a step of forming an elastic member housing recess in the housing of the worm reducer according to the embodiment of the present invention;
FIG. 7 is a perspective view of a cushioning member of the worm reducer according to the embodiment of the present invention;
FIG. 8 is a schematic view illustrating one step (elastic member arranging step) of an assembling process of the worm reducer according to the embodiment of the present invention;
FIG. 9 is a schematic view illustrating one step (jig inserting step) of the assembling process of the worm reducer according to the embodiment of the present invention;
FIG. 10 is a schematic view illustrating one step (worm shaft inserting step) of the assembling process of the worm reducer according to the embodiment of the present invention;
FIG. 11 is a schematic view illustrating one step (jig removing step) of the assembling process of the worm reducer according to the embodiment of the present invention;
FIG. 12A is a schematic view illustrating one step (cushioning member inserting step) of the assembling process of the worm reducer according to the embodiment of the present invention, which is a step subsequent to the step illustrated in FIG. 11;
FIG. 12B is a schematic sectional view taken along a line XIIB-XIIB in FIG. 12A;
FIG. 13 is a schematic view illustrating one step (closing step) of the assembling process of the worm reducer according to the embodiment of the present invention; and
FIG. 14 is a schematic view illustrating a state immediately after the worm shaft inserting step of the assembling process of the worm reducer in a modified example of the embodiment.

### DETAILED DESCRIPTION OF EMBODIMENTS

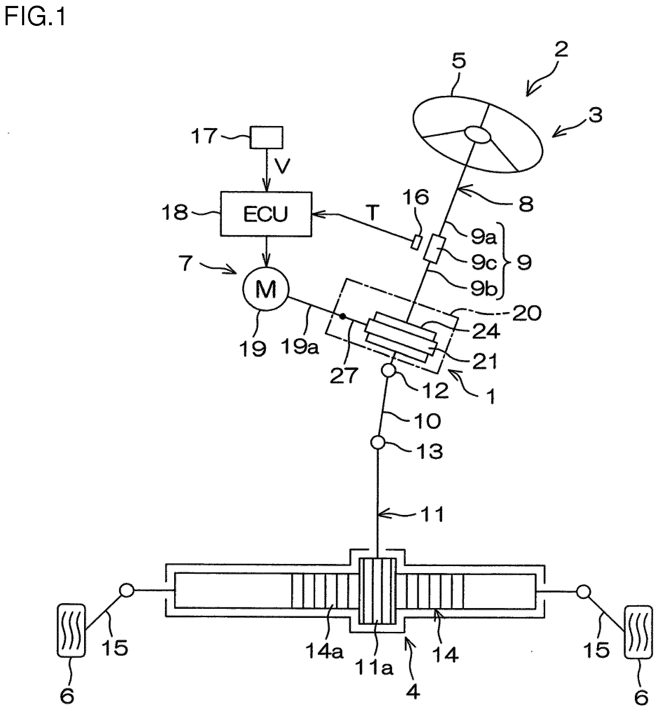

An embodiment of the present invention is described below in detail with reference to the accompanying drawings. FIG. 1 is a schematic view illustrating an overall structure of an electric power steering system 2 to which a worm reducer 1 according to one embodiment of the present invention is applied. Referring to FIG. 1, the electric power steering system 2 includes a steering mechanism 3 and a steering operation mechanism 4. The electric power steering system 2 turns steered wheels 6 based on a driver's operation of a steering wheel (steering member) 5. The steering mechanism 3 includes an assist mechanism 7 configured to assist the driver's operation of the steering wheel 5.

The steering mechanism 3 includes a steering shaft 8 configured to rotate in association with rotation of the steering wheel 5. The steering shaft 8 includes a column shaft 9, an intermediate shaft 10, and a pinion shaft 11. The column shaft 9 includes an input shaft 9a, an output shaft 9b, and a torsion bar 9c. The input shaft 9a is coupled to the steering wheel 5. The output shaft 9b is coupled to the intermediate shaft 10. The torsion bar 9c coaxially couples the input shaft 9a and the output shaft 9b to each other.

The output shaft 9b is coupled to the intermediate shaft 10 via a universal joint 12. The intermediate shaft 10 is coupled to the pinion shaft 11 via a universal joint 13. A pinion 11a is formed on the pinion shaft 11.

The steering operation mechanism 4 includes a rack shaft 14 and tie rods 15. A rack 14a is formed on the rack shaft 14. The rack 14a meshes with the pinion 11a. Each tie rod 15 has one end coupled to the rack shaft 14, and the other end coupled to the steered wheel 6.

When the steering wheel 5 is rotated in response to the driver's operation of the steering wheel 5, the pinion shaft 11 is rotated via the column shaft 9 and the intermediate shaft 10. The rotation of the pinion shaft 11 is converted into axial reciprocating motion of the rack shaft 14 by a rack and pinion mechanism. The reciprocating motion of the rack shaft 14 changes the steered angles of the steered wheels 6.

The assist mechanism 7 includes a torque sensor 16, a vehicle speed sensor 17, an electronic control unit (ECU) 18, an electric motor 19, and the worm reducer 1. The torque sensor 16 detects a steering torque T based on a torsion amount between the input shaft 9a and the output shaft 9b. The ECU 18 determines an assist torque based on the steering torque T detected by the torque sensor 16 and a vehicle speed V detected by the vehicle speed sensor 17. Driving of the electric motor 19 is controlled by the ECU 18. A rotational force (power) of the electric motor 19 is transmitted to the output shaft 9b of the column shaft 9 of the steering shaft 8 via the worm reducer 1. As a result, the assist torque is applied to the output shaft 9b, thereby assisting the driver's steering operation.

In this embodiment, a so-called column assist type electric power steering system is described as an example. In the column assist type electric power steering system, the power of the electric motor 19 is applied to the column shaft 9. The present invention is not limited to the column assist type electric power steering system, but is applicable to an electric power steering system including a worm reducer. Next, the structure of the worm reducer 1 is described.

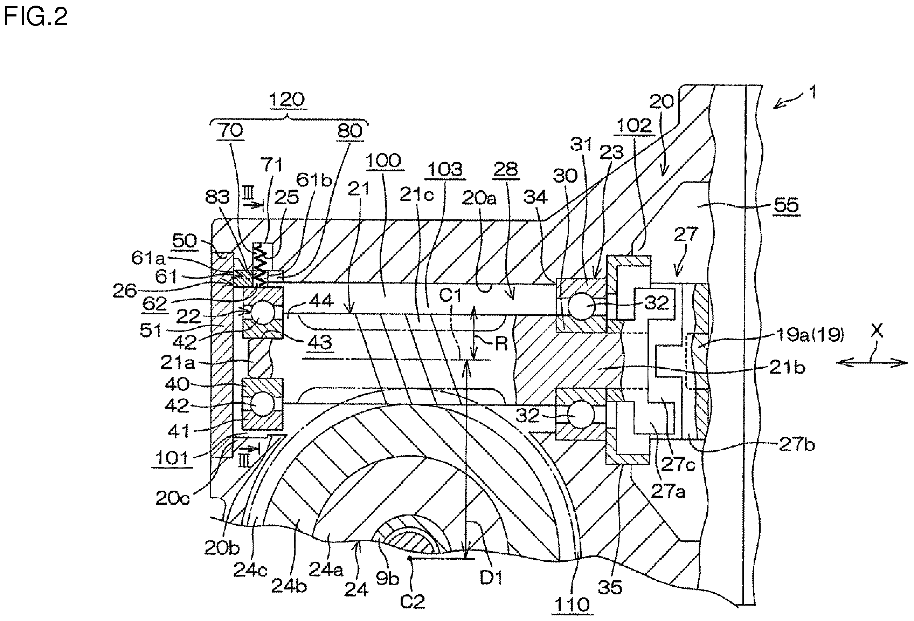

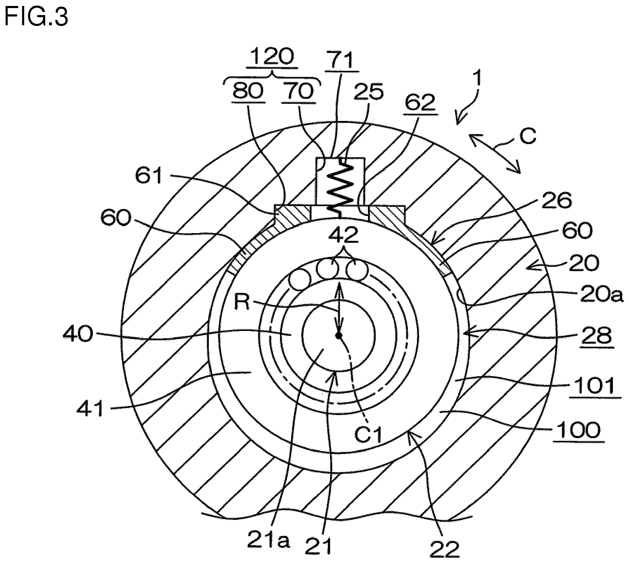

FIG. 2 is a schematic sectional view of a main part of the worm reducer 1. FIG. 3 is a schematic sectional view taken along a line III-III in FIG. 2. Referring to FIG. 2, the worm reducer 1 includes a housing 20, a worm shaft 21, a worm wheel 24, an elastic member 25, a cushioning member 26, and a lid member 51. A direction in which the worm shaft 21 extends is referred to as an axial direction X. The worm shaft 21 includes a first end 21a, a second end 21b, and a toothing 21c. The first end 21a and the second end 21b are spaced away from each other in the axial direction X. The toothing 21c is an intermediate portion between the first end 21a and the second end 21b. The first end 21a is an axial end of the worm shaft 21 opposite to the electric motor 19 side. The second end 21b is an axial end of the worm shaft 21 on the electric motor 19 side.

The worm wheel 24 is coupled to the output shaft 9b of the column shaft 9 so as to be rotatable together with the output shaft 9b. The worm wheel 24 includes an annular metal core 24a and a resin member 24b. The metal core 24a is coupled to the output shaft 9b so as to be rotatable together with the output shaft 9b. The resin member 24b is externally fitted to the metal core 24a. A toothing 24c is formed on the resin member 24b. The toothing 24c of the worm wheel 24 meshes with the toothing 21c of the worm shaft 21.

The worm shaft 21 is arranged substantially coaxially with an output shaft 19a of the electric motor 19. The second end 21b of the worm shaft 21 and the end of the output shaft 19a of the electric motor 19 are coupled to each other via a power transmission joint 27 in a torque transmissible and pivotable manner. The power transmission joint 27 includes a first rotation element 27a, a second rotation element 27b, and an intermediate element 27c. The first rotation element 27a is coupled to the second end 21b of the worm shaft 21 so as to be rotatable together with the worm shaft 21. The second rotation element 27b is coupled to the output shaft 19a of the electric motor 19 so as to be rotatable together with the output shaft 19a. The intermediate element 27c is interposed between the first rotation element 27a and the second rotation element 27b, and transmits a torque between the rotation elements 27a and 27b. The intermediate element 27c is formed of an elastic body such as rubber.

A first bearing 22 is attached to the first end 21a of the worm shaft 21. The first end 21a of the worm shaft 21 is rotatably supported on the housing 20 via the first bearing 22. A second bearing 23 is attached to the second end 21b of the worm shaft 21. The second end 21b of the worm shaft 21 is rotatably supported on the housing 20 via the second bearing 23. The intermediate element 27c of the power transmission joint 27 is elastically deformed to allow the worm shaft 21 to pivot about a bearing center of the second bearing 23 relative to the output shaft 19a of the electric motor 19.

For example, the first bearing 22 is a ball bearing. The first bearing 22 includes an inner ring 40, an outer ring 41, and a plurality of rolling elements 42. The inner ring 40 of the first bearing 22 is fitted to a fitting recess 43 provided on the outer periphery of the first end 21a of the worm shaft 21. Therefore, the inner ring 40 is rotatable together with the worm shaft 21. The inner ring 40 abuts against a positioning stepped portion 44 in the axial direction X. The positioning stepped portion 44 is provided on the outer periphery of the first end 21a of the worm shaft 21. Thus, axial movement of the inner ring 40 relative to the worm shaft 21 is restricted.

For example, the second bearing 23 is a ball bearing. The second bearing 23 includes an inner ring 30, an outer ring 31, and a plurality of rolling elements 32. The inner ring 30 of the second bearing 23 is fitted to the second end 21b of the worm shaft 21 by clearance fit so as to be rotatable together with the worm shaft 21. The outer ring 31 is held between a positioning stepped portion 34 and a clamping member 35 in the axial direction X. The positioning stepped portion 34 is provided on the housing 20. The clamping member 35 is threadedly fitted to a thread portion provided on an inner face 20a of the housing 20. Thus, axial movement of the outer ring 31 is restricted.

For example, the elastic member 25 is a compression coil spring. The elastic member 25 urges the worm shaft 21 toward the worm wheel 24. The cushioning member 26 is an elastic body such as rubber. The cushioning member 26 is arranged between the worm shaft 21 and the housing 20. The housing 20 has an internal space 28 that houses the worm shaft 21, the worm wheel 24, the elastic member 25, the cushioning member 26, the lid member 51, and the like. The internal space 28 is defined by the inner face 20a of the housing 20. The internal space 28 includes a worm shaft housing space 100, a worm wheel housing space 110, a recess 120, a first opening 50, and a second opening 55.

The worm shaft housing space 100 houses the worm shaft 21. The worm wheel housing space 110 houses the worm wheel 24. The recess 120 communicates with the worm shaft housing space 100. Each of the openings 50 and 55 allows the worm shaft housing space 100 and the outside of the internal space 28 to communicate with each other. The worm shaft housing space 100 has a substantially cylindrical shape extending in the axial direction X. The worm shaft housing space 100 includes a first end housing portion 101, a second end housing portion 102, and a toothing housing portion 103.

The first end housing portion 101 houses the first end 21a and the first bearing 22 attached to the first end 21a. The first end housing portion 101 is one end of the worm shaft housing space 100 in the axial direction X. The first end housing portion 101 is a movement hole in which the first bearing 22 is retainable so as to be movable in a direction in which a core-to-core distance D1 between the worm shaft 21 and the worm wheel 24 increases or decreases (see FIG. 3 as well). The core-to-core distance D1 is a distance between a central axis C1 of the worm shaft 21 and a central axis C2 of the worm wheel 24. The first opening 50 is formed at one end of the housing 20 in the axial direction X. The first end housing portion 101 communicates with the outside of the internal space 28 via the first opening 50.

The second end housing portion 102 houses the second end 21b, the second bearing 23 attached to the second end 21b, and the power transmission joint 27 coupled to the second end 21b. The second end housing portion 102 is the other end of the worm shaft housing space 100 in the axial direction X. The second opening 55 is formed at the other end of the housing 20 in the axial direction X. The second end housing portion 102 communicates with the outside of the internal space 28 via the second opening 55.

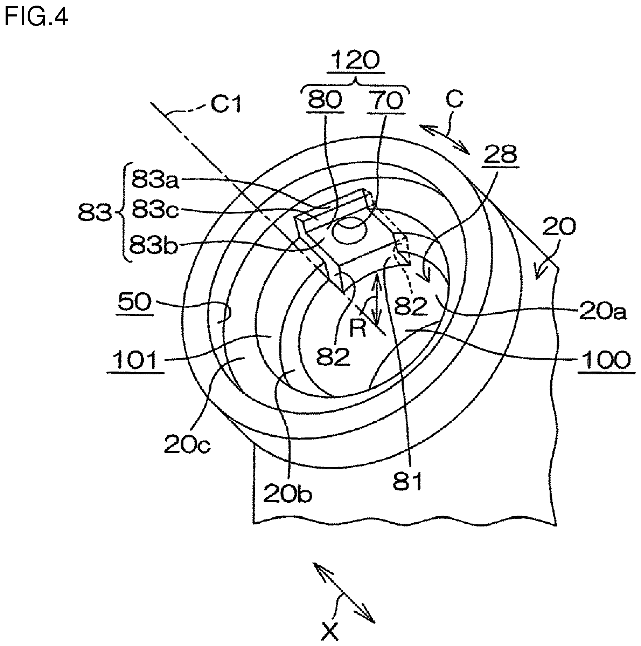

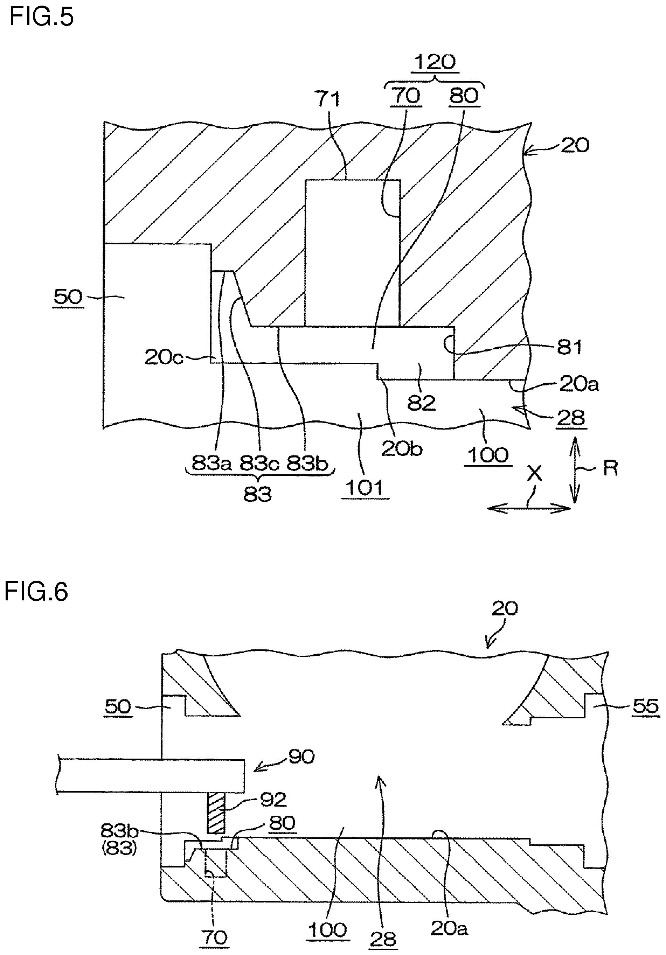

The toothing housing portion 103 houses the toothing 21c. The toothing housing portion 103 communicates with the worm wheel housing space 110. FIG. 4 is a perspective view of the housing 20 on the periphery of the first opening 50. FIG. 5 is a schematic sectional view of the housing 20 on the periphery of the first opening 50. A circumferential direction C to be used in the following description is a circumferential direction about the central axis C1 of the worm shaft 21, and a radial direction R is a direction orthogonal to the central axis C1 of the worm shaft 21 (see FIG. 3 as well). A direction toward the central axis C1 along the radial direction R is referred to as a radially inward direction, and a direction away from the central axis C1 along the radial direction R is referred to as a radially outward direction.

Referring to FIG. 4 and FIG. 5, an annular first stepped portion 20b is formed on the inner face 20a of the housing 20 at a part that defines the first end housing portion 101. The diameter of the first end housing portion 101 is increased by the first stepped portion 20b at some midpoint in the axial direction X toward the first opening 50 (see FIG. 2 as well). An annular second stepped portion 20c is formed on the inner face 20a of the housing 20 at a boundary between a part that defines the first opening 50 and the part that defines the first end housing portion 101. The second stepped portion 20c has an axial end face that faces the lid member 51 (see FIG. 2). The bore diameter of the first opening 50 is increased by the second stepped portion 20c so as to be larger than that of the first end housing portion 101.

The recess 120 is formed on the inner face 20a of the housing 20 at the part that defines the first end housing portion 101 (on the inner face 20a at one end of the housing 20). The recess 120 includes an elastic member housing recess 70 (second recess) and a cushioning member engaging recess 80 (first recess). Referring to FIG. 3, the cushioning member 26 engages with the cushioning member engaging recess 80. A part of the cushioning member 26 is housed in the cushioning member engaging recess 80, and the remaining part of the cushioning member 26 is housed in the worm shaft housing space 100.

Referring to FIG. 4 and FIG. 5, the cushioning member engaging recess 80 extends in the axial direction X from the axial end face of the second stepped portion 20c toward a side opposite to the first opening 50 side. An axial end face 81 of the cushioning member engaging recess 80 is located opposite to the first opening 50 side across the first stepped portion 20b. The cushioning member engaging recess 80 is open to the first opening 50 side in the axial direction X. The cushioning member engaging recess 80 has a pair of circumferential end faces 82 that face each other in the circumferential direction C. The cushioning member engaging recess 80 has a facing surface 83 that faces the worm shaft 21 (first bearing 22 attached to the worm shaft 21) in the radial direction R with a distance therebetween (see FIG. 2 as well). The facing surface 83 is coupled to the axial end face 81 and the circumferential end faces 82. The facing surface 83 constitutes a bottom face of the cushioning member engaging recess 80 in the radial direction R.

The facing surface 83 is constituted by a first face 83a, a second face 83b, and an inclined face 83c. The first face 83a, the inclined face 83c, and the second face 83b are arrayed in this order from the first opening 50 side in the axial direction X. The first face 83a extends in the axial direction X. The second face 83b extends in the axial direction X on a radially inner side (worm shaft housing space 100 side) with respect to the first face 83a and on the side opposite to the first opening 50 side across the first face 83a. The second face 83b is coupled to the axial end face 81. The inclined face 83c couples the first face 83a and the second face 83b to each other, and is inclined in the radially inward direction (closer to the worm shaft housing space 100) toward the side opposite to the first opening 50 side. The second face 83b is a flat face orthogonal to the radial direction R of the worm shaft 21.

The elastic member housing recess 70 is formed on the second face 83b of the facing surface 83 of the cushioning member engaging recess 80. The elastic member housing recess 70 is a bottomed cylindrical hole extending in the radial direction R from the second face 83b. The elastic member housing recess 70 communicates with the first end housing portion 101 of the worm shaft housing space 100 via the cushioning member engaging recess 80. The elastic member housing recess 70 houses at least a part of the elastic member 25 (see FIG. 3).

As illustrated in FIG. 6, the elastic member housing recess 70 is formed by drilling the facing surface 83 of the cushioning member engaging recess 80 (second face 83b of the facing surface 83) with a machine tool 90 (elastic member housing recess forming step). The machine tool 90 includes a cutting tool 92 such as a drill or an end mill. The machine tool 90 is inserted into the internal space 28 from the first opening 50, and the elastic member housing recess 70 is formed on the second face 83b of the facing surface 83.

Referring to FIG. 3, in a state in which the elastic member 25 is compressed in a depth direction of the elastic member housing recess 70 (radial direction R), one end of the elastic member 25 in the compression direction abuts against a bottom 71 of the elastic member housing recess 70, and the other end of the elastic member 25 in the compression direction abuts against the first bearing 22 attached to the first end 21a of the worm shaft 21 (outer ring 41 of the first bearing 22). The elastic member 25 urges the worm shaft 21 in the radially inward direction.

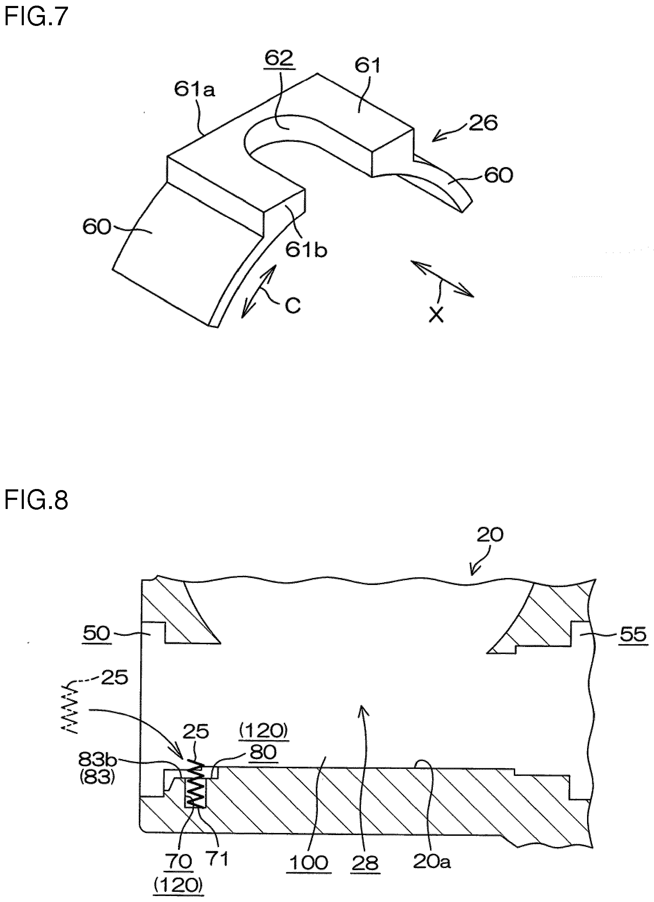

Referring to FIG. 2, the lid member 51 is attached to the housing 20, and closes the first opening 50. The lid member 51 is inserted into the first opening 50 from the outside of the housing 20, and axial movement of the lid member 51 is restricted by the second stepped portion 20c. FIG. 7 is a perspective view of the cushioning member 26. The cushioning member 26 includes a pair of interposed portions 60, an engagement portion 61, and an elastic member guiding portion 62. Each of the interposed portions 60 is interposed between the housing 20 and the first bearing 22, and extends in the circumferential direction C. The engagement portion 61 couples the circumferential ends of the interposed portions 60 to each other. The engagement portion 61 protrudes in the radially outward direction with respect to the interposed portions 60, and engages with the cushioning member engaging recess 80 (see FIG. 3). Thus, rotation and movement of the cushioning member 26 in the circumferential direction C are restricted.

The elastic member 25 is inserted through the elastic member guiding portion 62. The elastic member guiding portion 62 passes through the engagement portion 61. The end of the elastic member guiding portion 62 opposite to the first opening 50 side in the axial direction X is open to the outside of the engagement portion 61. The engagement portion 61 has a closing face 61a and an opening face 61b that are arranged away from each other in the axial direction X. Referring to FIG. 2, the closing face 61a closes the end of the elastic member guiding portion 62 on the first opening 50 side in the axial direction X. The opening face 61b has an opening formed such that the end of the elastic member guiding portion 62 opposite to the first opening 50 side in the axial direction X is open to the outside of the engagement portion 61.

Next, a method for assembling the worm reducer 1 is described with reference to FIG. 8 to FIG. 13. As illustrated in FIG. 8, the elastic member 25 inserted into the internal space 28 of the housing 20 from the first opening 50 is arranged on the bottom 71 of the elastic member housing recess 70 of the recess 120 (elastic member arranging step). In the state in which the elastic member 25 is arranged on the bottom 71 of the elastic member housing recess 70, a part (distal end) of the elastic member 25 is located in the worm shaft housing space 100.

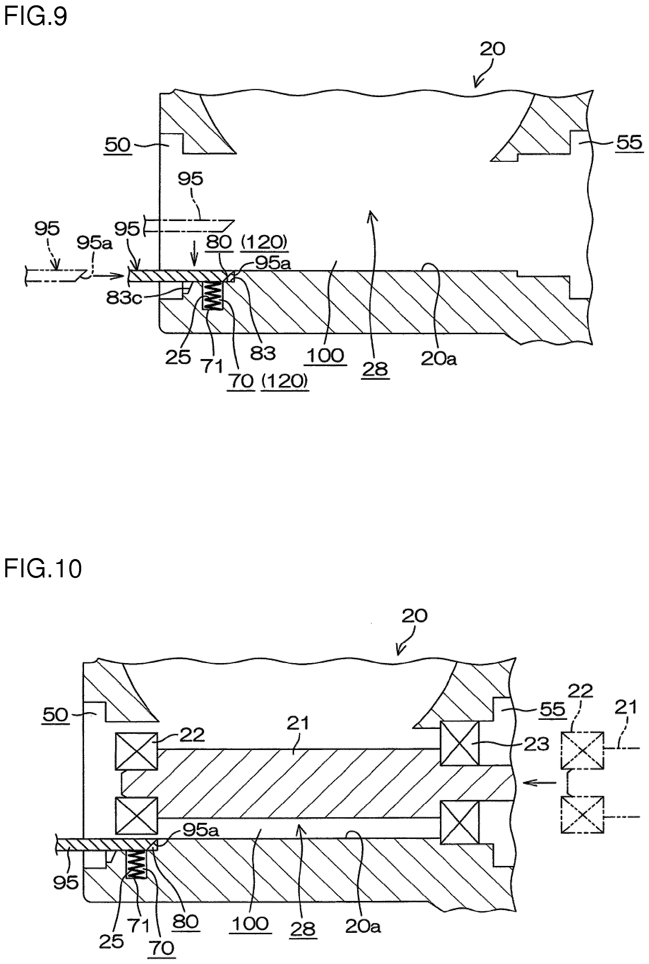

Next, as illustrated in FIG. 9, a jig 95 for compressing the elastic member 25 arranged in the elastic member housing recess 70 is inserted into the internal space 28 of the housing 20 from the first opening 50 (jig inserting step). For example, the jig 95 is a substantially rectangular plate. Specifically, the jig 95 is inserted into the cushioning member engaging recess 80 from the first opening 50. In the state in which the jig 95 is inserted into the cushioning member engaging recess 80, the elastic member 25 is elastically compressed between the jig 95 and the bottom 71 of the elastic member housing recess 70. Therefore, in the state in which the jig 95 is inserted into the cushioning member engaging recess 80, the jig 95 and the elastic member 25 are located in the recess 120, and are retreated from the worm shaft housing space 100.

The facing surface 83 of the cushioning member engaging recess 80 includes the inclined face 83c, and therefore the jig 95 can smoothly be inserted into the cushioning member engaging recess 80. In order that the jig 95 can smoothly compress the elastic member 25, an inclined face 95a that faces the inclined face 83c may be provided at the distal end of the jig 95. In order that the jig 95 can smoothly compress the elastic member 25, the jig 95 may be inserted into the cushioning member engaging recess 80 by moving the jig 95 to a position where the jig 95 faces the facing surface 83 (moving the jig 95 from a position indicated by a long dashed double-short dashed line to a position indicated by a long dashed short dashed line) and then moving the jig 95 closer to the facing surface 83.

Next, as illustrated in FIG. 10, the worm shaft 21 to which the first bearing 22 and the second bearing 23 are fitted is inserted into the housing 20 (worm shaft inserting step). As indicated by long dashed double-short dashed lines in FIG. 10, the worm shaft 21 is inserted into the worm shaft housing space 100 from the second opening 55 in a state in which the first bearing 22 is oriented to the housing 20.

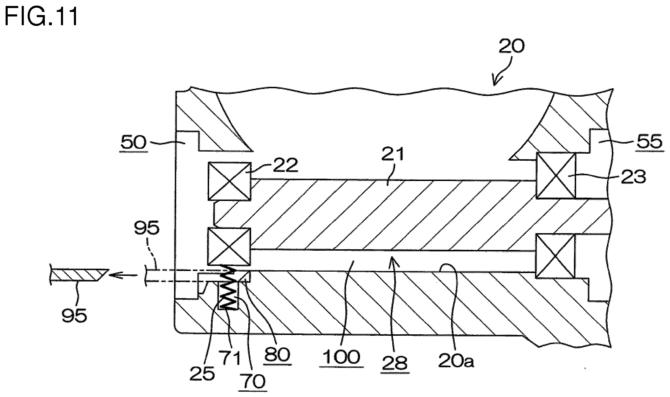

Next, as illustrated in FIG. 11, the jig 95 is removed from the cushioning member engaging recess 80 by pulling out the jig 95 from the first opening 50 side. In this manner, the jig 95 is removed from the housing 20 (jig removing step). Thus, the elastic member 25 is released from the compression by the jig 95. The elastic member 25 urges the worm shaft 21 in the radial direction R via the first bearing 22 by causing the distal end of the elastic member 25 to abut against the first bearing 22.

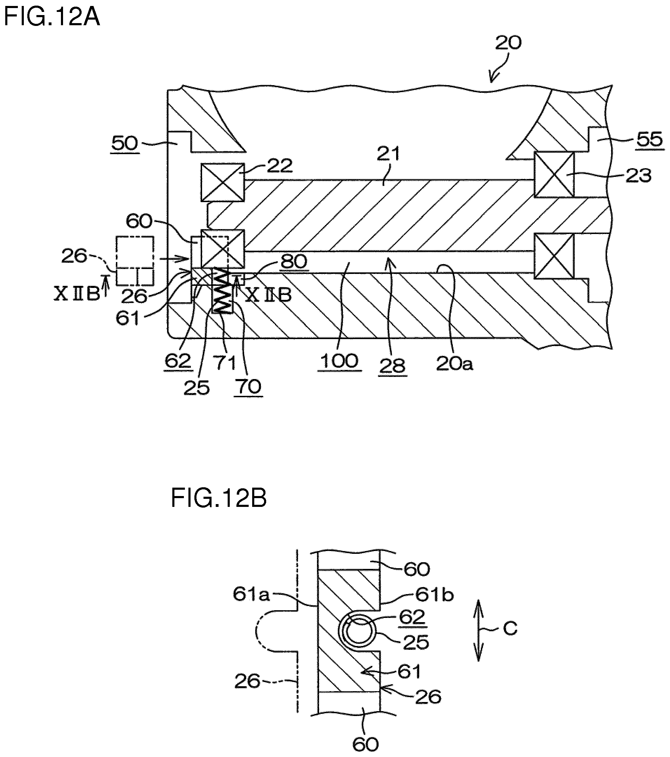

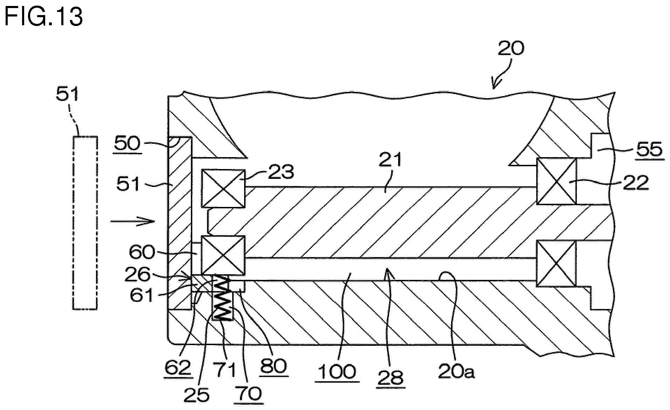

Next, as illustrated in FIG. 12A, the cushioning member 26 is inserted into the internal space 28 of the housing 20 from the first opening 50. The cushioning member 26 is inserted between the inner face 20a of the housing 20 and the first bearing 22 fitted to the worm shaft 21 (cushioning member inserting step). As illustrated in FIG. 12B, the cushioning member 26 is inserted into the housing 20 in a state in which the interposed portions 60 and the engagement portion 61 are arrayed in the circumferential direction C and the opening face 61b of the engagement portion 61 is oriented to the elastic member 25. The cushioning member 26 (engagement portion 61 of the cushioning member 26) engages with the cushioning member engaging recess 80. Next, as illustrated in FIG. 13, the lid member 51 is attached to the housing 20, and closes the first opening 50 (closing step).

Although illustration is omitted, the clamping member 35 is then threadedly fitted to the thread portion provided on the inner face 20a of the housing 20, and the output shaft 19a of the electric motor 19 is coupled to the second end 21b of the worm shaft 21 via the power transmission joint 27. The worm wheel 24 is inserted into the housing 20, and the toothing 24c of the worm wheel 24 is meshed with the toothing 21c of the worm shaft 21. The assembling (manufacturing) of the worm reducer 1 is completed after other necessary members are attached.

According to this embodiment, the jig inserting step is executed before the worm shaft inserting step. Through the compression of the elastic member 25 by the jig 95, the elastic member 25 can be retreated from the space inside the housing 20 where the worm shaft 21 is inserted (worm shaft housing space 100). Therefore, the worm shaft 21 can smoothly be inserted into the housing 20 without being hindered by the elastic member 25.

The jig removing step is executed after the worm shaft inserting step. Thus, the elastic member 25 released from the compression by the jig 95 abuts against the worm shaft 21, and urges the worm shaft 21 toward the worm wheel 24. By adding the simple steps that are the jig inserting step and the jig removing step in the method for manufacturing the worm reducer 1, in which the worm shaft inserting step is executed after the elastic member arranging step, the worm shaft 21 can easily be arranged at an appropriate position in the housing 20 (in the worm shaft housing space 100) without being obstructed by the elastic member 25. Thus, the assembling workability of the worm reducer 1 can be improved.

According to this embodiment, the recess 120 is formed on the inner face 20a of the housing 20 at the part that defines one end of the worm shaft housing space 100 in the axial direction X (on the inner face 20a at one end of the housing 20). The first opening 50 to be closed by the lid member 51 after the jig removing step communicates with one end of the worm shaft housing space 100 in the axial direction X. That is, the first opening 50 is formed in the vicinity of the recess 120. In the elastic member arranging step, the elastic member 25 is inserted into the recess 120 (specifically, the elastic member housing recess 70) inside the housing 20 via the first opening 50 formed in the vicinity of the elastic member housing recess 70. Therefore, the arrangement of the elastic member 25 in the elastic member housing recess 70 is facilitated as compared to the structure without the first opening 50. In the jig inserting step, the jig 95 is inserted into the housing 20 via the first opening 50 formed in the vicinity of the recess 120. Therefore, the movement distance of the jig 95 inside the housing 20 is shorter than that of the structure without the first opening 50. Thus, the insertion and removal of the jig 95 into and from the housing 20 are facilitated. Accordingly, the assembling workability of the worm reducer 1 can be improved.

The machine tool 90 can be inserted into the housing 20 via the first opening 50. Therefore, the formation of the elastic member housing recess 70 is also facilitated. According to this embodiment, the elastic member housing recess 70 is formed on the bottom face of the cushioning member engaging recess 80 (second face 83b of the facing surface 83) that is formed on the inner face 20a of the housing 20. By inserting the jig 95 into the cushioning member engaging recess 80 in the jig inserting step, the elastic member 25 can be compressed. Therefore, the jig 95 is not an obstacle in the subsequent worm shaft inserting step. The cushioning member engaging recess 80 is open to the first opening 50 side. Therefore, the jig 95 can easily be pulled out from the first opening 50 side in the jig removing step. Thus, the assembling workability of the worm reducer 1 can be improved.

In a structure without the cushioning member 26, the first bearing 22 attached to the worm shaft 21 and the housing 20 strike against each other due to displacement of the first bearing 22. Therefore, striking noise is generated due to the strike between metals. By arranging the cushioning member 26 between the worm shaft 21 and the inner face 20a of the housing 20 in the cushioning member inserting step as in this embodiment, the generation of striking noise can be suppressed. In the cushioning member inserting step, the cushioning member 26 (engagement portion 61 of the cushioning member 26) engages with the cushioning member engaging recess 80 so as not to be rotatable in the circumferential direction C. Therefore, the cushioning member engaging recess 80 where the jig 95 is inserted in the assembling process of the worm reducer 1 can also be used as a locking structure for preventing the rotation of the cushioning member 26 in the circumferential direction C. Thus, there is no need to provide a recess for preventing the rotation of the cushioning member 26 in the housing 20 separately from the elastic member housing recess 70 or the cushioning member engaging recess 80.

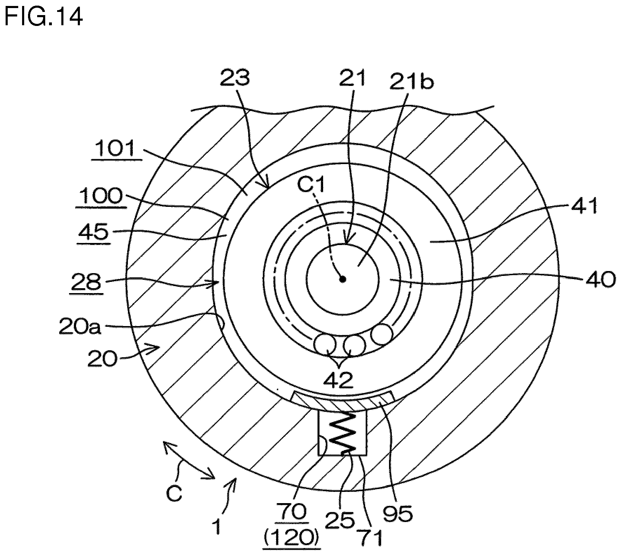

The present invention is not limited to the embodiment described above, but various modifications may be made within the scope of claims. For example, the cushioning member engaging recess 80 need not be provided on the inner face 20a of the housing 20. In this case, the elastic member housing recess 70 is formed on the inner face 20a of the housing 20 at an annular surface that defines the first end housing portion 101. Also in this case, as illustrated in FIG. 14, it is only necessary that the jig 95 be retreated from an area in the worm shaft housing space 100 where the worm shaft 21 (in a strict sense, the worm shaft 21 and the first bearing 22) is inserted. In this structure, the worm shaft 21 can be inserted into the housing 20 without being obstructed by the jig 95 in the worm shaft inserting step.

Regarding other features, various modifications may be made to the present invention within the scope of claims.

## Claims

1. A method for manufacturing a worm reducer (1) in which an elastic member (25) urges a worm shaft (21) housed in a housing (20) toward a worm wheel (24), the method comprising:
an elastic member (25) arranging step of arranging the elastic member (25) in a recess (120) formed on an inner face of the housing (20);
a jig (95) inserting step of inserting a jig (95) into the housing (20), and compressing the elastic member (25) by the jig (95);
a worm shaft (21) inserting step of inserting the worm shaft (21) into the housing (20) after the jig (95) inserting step; and
a jig (95) removing step of removing the jig (95) from the housing (20).

2. The method for manufacturing a worm reducer (1) according to claim 1, wherein
an opening (50) is formed at one end of the housing (20),
the recess (120) is formed on the inner face at the one end of the housing (20),
the method further includes a closing step of closing the opening (50) by attaching a lid member (51) to the housing (20) after the jig (95) removing step, and
the jig (95) inserting step includes inserting the jig (95) into the housing (20) from the opening (50).

3. The method for manufacturing a worm reducer (1) according to claim 2, wherein the recess (120) includes:
a first recess (80); and
a second recess (70) formed on a bottom face of the first recess (80),
the first recess (80) is open to the opening side,
the jig (95) inserting step includes inserting the jig (95) into the first recess (80), and
the jig (95) removing step includes removing the jig (95) from the first recess (80) by pulling out the jig (95) from the opening side.

4. The method for manufacturing a worm reducer (1) according to claim 3, further comprising a cushioning member (26) inserting step of inserting a cushioning member (26) between the worm shaft (21) and the inner face of the housing (20) after the jig (95) removing step, wherein
the cushioning member (26) inserting step includes engaging the cushioning member (26) with the first recess (80) so that the cushioning member (26) is not rotatable in a circumferential direction of the worm shaft (21).

5. A worm reducer, comprising:
a worm shaft (21) extending in an axial direction;
a worm wheel (24) that meshes with the worm shaft (21);
a housing (20) having a worm shaft housing space (100) that houses the worm shaft (21), and an opening (50) that communicates with one end of the worm shaft housing space (100) in the axial direction, the housing (20) having a recess (120) formed on an inner face of the housing (20) at a part that defines the one end of the worm shaft housing space (100) in the axial direction, wherein the recess (120) includes a first recess (80) having a facing surface that faces the worm shaft (21) in a radial direction of the worm shaft (21) with a distance therebetween; and a second recess (70) formed on the facing surface, and the first recess (80) is open to the opening side;
an elastic member (25) that is arranged in the recess (120) and urges the worm shaft (21) toward the worm wheel (24); and
a cushioning member (26) that is arranged between the worm shaft (21) and the inner face of the housing (20) and engages with the first recess (80) so as not to be rotatable in a circumferential direction of the worm shaft (21);
a lid member (51) that closes the opening.

6. An electric power steering system, wherein power of an electric motor (19) is transmitted to a steering shaft (8) via the worm reducer (1) according to claim 5.

## Patentansprüche

1. Verfahren zum Herstellen eines Schneckenuntersetzungsgetriebes (1), in welchem ein elastisches Teil (25) einen Schneckenschaft (21), der in einem Gehäuse (20) aufgenommen ist, zu einem Schneckenrad (24) drängt, wobei das Verfahren:
einen Anordnungsschritt des elastischen Teils (25), wobei das elastische Teil (25) in einer Aussparung (120), die auf einer inneren Fläche des Gehäuses (20) gebildet ist, angeordnet wird;
einen Einführschritt einer Vorrichtung (95), wobei eine Vorrichtung (95) in das Gehäuse (20) eingeführt wird und das elastische Teil (25) durch die Vorrichtung (95) zusammengedrückt wird;
einen Einführschritt des Schneckenschafts (21), wobei der Schneckenschaft (21) nach dem Einführschritt der Vorrichtung (95) in das Gehäuse (20) eingeführt wird; und
einen Entfernungsschritt der Vorrichtung (95), wobei die Vorrichtung (95) von dem Gehäuse (20) entfernt wird,
aufweist.

2. Verfahren zum Herstellen eines Schneckenuntersetzungsgetriebes (1) gemäß Anspruch 1, wobei
eine Öffnung (50) an einem Ende des Gehäuses (20) gebildet ist,
die Aussparung (120) auf der inneren Fläche an einem Ende des Gehäuses (20) gebildet ist,
das Verfahren zusätzlich ein Verschließungsschritt enthält, wobei nach dem Entfernungsschritt der Vorrichtung (95) die Öffnung (50) durch Anbringen eines Deckelteils (51) an dem Gehäuse (20) geschlossen wird, und
der Einführschritt der Vorrichtung (95) ein Einführen der Vorrichtung (95) in das Gehäuse (20) von der Öffnung (50) enthält.

3. Verfahren zum Herstellen eines Schneckenuntersetzungsgetriebes (1) gemäß Anspruch 2, wobei die Aussparung (120):
eine erste Aussparung (80); und
eine zweite Aussparung (70), die auf einer Bodenfläche der ersten Aussparung (80) gebildet ist, enthält,
wobei die erste Aussparung (80) zu der Öffnungsseite offen ist,
der Einführschritt der Vorrichtung (95) ein Einführen der Vorrichtung (95) in die erste Aussparung (80) enthält und
der Entfernungsschritt der Vorrichtung (95) ein Entfernen der Vorrichtung (95) von der ersten Aussparung (80) durch Herausziehen der Vorrichtung (95) von der Öffnungsseite enthält.

4. Verfahren zum Herstellen eines Schneckenuntersetzungsgetriebes (1) gemäß Anspruch 3, wobei diese zusätzlich einen Einführschritt eines Dämpfungsteils (26) aufweist, wobei ein Dämpfungsteil (26) nach dem Entfernungsschritt der Vorrichtung (95) zwischen den Schneckenschaft (21) und der inneren Fläche des Gehäuses (20) eingeführt wird, wobei
der Einführschritt des Dämpfungsteils (26) ein Kuppeln des Dämpfungsteils (26) mit der ersten Aussparung (80) enthält, so dass das Dämpfungsteil (26) in einer Umfangsrichtung des Schneckenschaft (21) nicht rotierbar ist.

5. Schneckenuntersetzungsgetriebe mit:
einem Schneckenschaft (21), der sich in einer axialen Richtung erstreckt;
einem Schneckenrad (24), das mit dem Schneckenschaft (21) in Eingriff ist;
einem Gehäuse (20), das einen Schneckenschaftgehäuseraum (100), der den Schneckenschaft (21) aufnimmt, und eine Öffnung (50) hat, die mit einem Ende des Schneckenschaftgehäuseraums (100) in der axialen Richtung verbunden ist, wobei das Gehäuse (20) eine Aussparung (120) hat, die auf einer inneren Fläche des Gehäuses (20) in einem Teil, der das eine Ende des Schneckenschaftgehäuseraumes (100) in der axialen Richtung definiert, gebildet ist, wobei die Aussparung (120) eine erste Aussparung (80), die eine zugewandte Fläche hat, die dem Schneckenschaft (21) in der radialen Richtung des Schneckenschafts mit einem Abstand dazwischen zugewandt ist; und eine zweite Aussparung (70) enthält, die auf der zugewandten Fläche gebildet ist, und die erste Aussparung (80) auf der Öffnungsseite offen ist;
einem elastischen Teil (25), das in der Aussparung (120) angeordnet ist und den Schneckenschaft (21) zu dem Schneckenrad (24) drängt; und
einem Dämpfungsteil (26), das zwischen dem Schneckenschaft (21) und der inneren Fläche des Gehäuses (20) angeordnet ist und mit der ersten Aussparung (80) gekoppelt ist, um nicht in einer Umfangsrichtung des Schneckenschafts (21) rotierbar zu sein;
einem Deckelteil (51), das die Öffnung schließt.

6. Servolenksystem, wobei eine Leistung eines elektrischen Motors (19) zu einer Lenkwelle (8) durch das Schneckenuntersetzungsgetriebe (1) gemäß Anspruch 5 übertragen ist.

## Revendications

1. Procédé pour fabriquer un réducteur à vis sans fin (1) dans lequel un élément élastique (25) pousse une tige de vis sans fin (21) logée dans un boîtier (20) vers une roue de vis sans fin (24), le procédé comprenant :
une étape d'agencement d'élément élastique (25) pour agencer l'élément élastique (25) dans un évidement (120) formé sur une surface interne du boîtier (20) ;
une étape d'insertion de gabarit (95) pour insérer un gabarit (95) dans le boîtier (20) et comprimant l'élément élastique (25) grâce au gabarit (95) ;
une étape d'insertion de tige de vis sans fin (21) pour insérer la tige de vis sans fin (21) dans le boîtier (20) après l'étape d'insertion de gabarit (95) ; et
une étape de retrait de gabarit (95) pour retirer le gabarit (95) du boîtier (20).

2. Procédé pour fabriquer un réducteur à vis sans fin (1) selon la revendication 1, dans lequel :
une ouverture (50) est formée au niveau d'une extrémité du boîtier (20),
l'évidement (120) est formé sur la face interne au niveau de la une extrémité du boîtier (20),
le procédé comprend en outre une étape de fermeture pour fermer l'ouverture (50) en fixant un élément de couvercle (51) sur le boîtier (20) après l'étape de retrait de gabarit (95), et
l'étape d'insertion de gabarit (95) comprend l'insertion du gabarit (95) dans le boîtier (20) par l'ouverture (50).

3. Procédé pour fabriquer un réducteur à vis sans fin (1) selon la revendication 2, dans lequel l'évidement (120) comprend :
un premier évidement (80) ; et
un second évidement (70) formé sur une face inférieure du premier évidement (80), le premier évidement (80) est ouvert sur le côté d'ouverture,
l'étape d'insertion de gabarit (95) comprend l'insertion du gabarit (95) dans le premier évidement (80) et
l'étape de retrait de gabarit (95) comprend le retrait du gabarit (95) du premier évidement (80) en retirant le gabarit (95) par le côté d'ouverture.

4. Procédé pour fabriquer un réducteur à vis sans fin (1) selon la revendication 3, comprenant en outre une étape d'insertion d'élément d'amortissement (26) pour insérer un élément d'amortissement (26) entre la tige de vis sans fin (21) et la face interne du boîtier (20) après l'étape de retrait de gabarit (95), dans lequel :
l'étape d'insertion d'élément d'amortissement (26) comprend l'étape pour mettre en prise l'élément d'amortissement (26) avec le premier évidement (80) de sorte que l'élément d'amortissement (26) ne peut pas tourner dans une direction circonférentielle de la tige de vis sans fin (21).

5. Réducteur à vis sans fin comprenant :
une tige de vis sans fin (21) s'étendant dans une direction axiale ;
une roue de vis sans fin (24) qui s'engrène avec la tige de vis sans fin (21) ;
un boîtier (20) ayant un espace de boîtier de tige de vis sans fin (100) qui loge la tige de vis sans fin (21) et une ouverture (50) qui communique avec une extrémité de l'espace de boîtier de tige de vis sans fin (100) dans la direction axiale, le boîtier (20) ayant un évidement (120) formé sur une face interne du boîtier (20) au niveau d'une partie qui définit la première extrémité de l'espace de boîtier de tige de vis sans fin (100) dans la direction axiale, dans lequel l'évidement (120) comprend un premier évidement (80) ayant une surface en vis-à-vis qui fait face à la tige de vis sans fin (21) dans une direction radiale de la tige de vis sans fin (21) avec une distance entre elles ; et un second évidement (70) formé sur la surface en vis-à-vis, et le premier évidement (80) est ouvert du côté de l'ouverture ;
un élément élastique (25) qui est agencé dans l'évidement (120) et pousse la tige de vis sans fin (21) vers la roue de vis sans fin (24) ; et
l'élément d'amortissement (26) qui est agencé entre la tige de vis sans fin (21) et la face interne du boîtier (20) et se met en prise avec le premier évidement (80) ne peut pas tourner dans une direction circonférentielle de la tige de vis sans fin (21) ;
un élément de couvercle (51) qui ferme l'ouverture.

6. Système de direction assistée électrique, dans lequel l'énergie d'un moteur électrique (19) est transmise à un arbre de direction (8) via le réducteur à vis sans fin (1) selon la revendication 5.
